# EUROPEAN PATENT APPLICATION

(11) **EP 3 858 134 A1**
(43) Date of publication of application: **04.08.2021**
(21) Application number: 21153839.2
(22) Date of filing: 27.01.2021
(51) Int. Cl.: A01G 9/02

(54) **A PLANT HOLDER**

(30) Priority: 30.01.2020 GB 202001319
(71) Applicant: Rowlands, Richard, Ashley, Cheshire WA14 3PT (GB)
(72) Inventor: Rowlands, Richard, Ashley, Cheshire WA14 3PT (GB)
(74) Representative: Wilson Gunn

(57) **Abstract**

A plant holder and a blade are provided for use in horticultural systems, in particular, Living Wall systems. The plant holder comprises a module and at least one blade, the at least one blade comprises a plurality of apertures, each aperture being closed arounds its edges.

## Description

### Technical Field of the Invention

The present invention relates to a plant holder and to a blade for use in a plant holder, in particular, but not exclusively, for a plant holder to be used as part of a Living Wall system.

### Background to the Invention

A Living Wall system comprises one or more plant holders connected to a wall, typically a vertical wall, which can be on the inside or outside of a building. The Living Wall system provides the effect of a wall made of plants and other foliage. By 'plants', we mean all types of plants and flowers, including fruit and vegetables. Beneficially, Living Wall systems are aesthetically appealing, improve air quality, enhance local biodiversity, can provide a positive social effect such as by reducing stress and increasing creativity, and can provide a carbon-offset benefit to the building on which it is installed.

Plant holders are incorporated into Living Wall systems in order to provide a holder for the plants and, typically, provide a support to an irrigation system which provides the plants with water and nutrients.

A plant holder typically comprises a module having at least one blade. The module may take a variety of forms but is typically an open container which accommodates at least one blade. Each module typically comprises a base wall, a lower wall, an upper wall, and two side walls, such that each module is formed substantially as a container having an open face thus forming an inner volume of the module. The module is defined by the inner volume, the base wall, lower wall, upper wall and two side walls. The base wall, lower wall, upper wall and side walls each comprise an exterior face and an interior face. The interior face being that which faces inwardly, i.e. toward the inner volume, and the exterior face being that which faces outwardly. Each blade is positioned adjacent an interior face of the base portion and extends outwardly from the base portion when the module is affixed to a wall, i.e. when in use. The module is affixed to a wall using a standard attaching means, such as a hanging rail or fasteners. Typically, in use, each blade is orientated at an angle such that the one or more plants are positioned on, and supported by, the or each blade. Thus, in use, the or each plant is enclosed within the walls of the module and the blade but is accessible via the open face of the module.

Plant holders of this general type are known. One such known plant holder comprises a plurality of blades fixed to the base portion of the plant holder. In this known type of plant holder, the blades are fixed (either by a suitable adhesive or plastic welding, or as a result of the blades being formed integral with the module) to the base wall of the module such that the blades cannot be removed from the module. A number of these blades comprise either one or two slits. By 'slit' we mean an elongated cut-through in the blade, the cut-through being open at one end and closed at its opposite end, i.e. the slit is not completely surrounded by the material of the blade. Comparatively, we intend herein a 'slot' to mean an elongated cut-through in the blade which is closed at both ends, i.e. the slot is completely surrounded by the material of the blade.

However, the known plant holders as described above are associated with a number of disadvantages. For example, because the blades are fixed to the base wall of the module, if a blade becomes damaged such that it can no longer suitably support a plant, it cannot be easily replaced and will often result in the entire module having to be discarded and replaced with a new module. This is costly and time consuming for the user.

Moreover, the slits located in the blades provide a poor flow of water through the inner volume. This leads to over saturation of plants located toward the source of water from the irrigation system (when in use) and starvation of plants located further from the source of water from the irrigation system (when in use). As a result, plants regularly die or suffer from plant-based diseases, therefore, considerably reducing the aesthetic appearance of the Living Wall, thereby forcing the user to replace the plants which, again, is costly and time consuming.

Further, the purpose of the slits located in the blades is to not only allow water to drain through the inner volume of the module but also to provide an aperture for plant roots to grow through and entwine thus enhancing the structural integrity of the plants upon a blade. In the known plant holders, the geometry of the slits provides a poor mechanism for root growth which results in plants which are weakly held upon the blades. As a result, the plants are easily dislodged from their position on the blades and can therefore be easily removed from the plant holder, for example in instances of strong wind.

In addition, the known plant holders described above are manufactured as a 'one-off' having blades fixed into the module at intervals specific to the size and estimated growth of the plants which are to be held in that module. This, therefore, does not allow for replacement of one type of plant with a different type of plant which is of a substantially different size or with different growth dimensions or growth rate. If, for example, a user was to decide to replace the present plants with plants of a substantially different size, the user would be required to replace the plant holder with a plant holder having blades spaced throughout the inner volume of the module at differently spaced height intervals to that of the original plant holder. Thus, a new plant holder will need to be manufactured and installed within the Living Wall system. This is a costly and time-consuming process.

Furthermore, some known plant holders merely provide a surface upon which a plant container holding a plant can be positioned. Such plants encounter numerous growing problems. For example, the roots of these plants become 'pot bound' and have a tendency to grow around the container in a constricted configuration, thus resulting in a problem commonly known as 'root spiralling'. Plant roots which have succumbed to root spiralling suffer from a reduced uptake of water and nutrients which may result in abnormal plant growth and/or abnormal plant appearance and, in some case, death of the plant.

It is therefore an object of the present invention to overcome these and other disadvantages and to provide an improved plant holder.

### Summary of the Invention

In a broad aspect, the invention concerns a plant holder comprising a module and at least one blade, the at least one blade comprising a plurality of apertures.

According to a first aspect of the invention there is provided a plant holder comprising a module and at least one blade, the at least one blade comprising a plurality of apertures, each aperture being closed around its edges.

Providing a blade comprising a plurality of apertures wherein each aperture is closed arounds its edges achieves a number of advantages.

Advantageously, the plurality of apertures provides for an improved flow of water through the module when in use. In this respect, the plurality of apertures provides a greater area of the blade through which water can pass through and thus fall onto the plant(s) positioned below. Thus, the present invention provides for improved drainage of water through the plant holder in use and, therefore, eliminates, or at the very least, minimises, saturation of plants located closest to the source of water from the irrigation system and starvation of plants located furthest from the source of water from the irrigation system.

Beneficially, the plurality of apertures provides an abundance of opportunities for plant roots to grow and entwine. In use, the plant roots grow downwardly through the apertures and entwine with adjacent plant roots. Due to the plurality of apertures, a significant number of plant roots are able to entwine, therefore, vastly increasing the structural integrity of the plant on the blade. Advantageously, each plant is, therefore, robustly held onto a blade which thus vastly decreases the possibility of the plants being dislodged or removed from their position on a blade, for example in instances of strong wind.

Beneficially, a blade having a plurality of apertures, each aperture being closed around its edges, provides a stronger, more durable blade than one which comprises slits only. A blade comprising one or more slits only has one or more weak points, the weak points being located at the base of each slit which, if the blade is bent or twisted, for example during production or installation, can result in the blade being broken at the weak point.

Advantageously, the plurality of apertures, each aperture being closed around its edges, provides a blade upon which a plant, or plants, can be directly positioned without the need for the plant(s) to be housed in a separate plant pot. Thus, the plants are not 'pot bound' and thus do not suffer from the effects of being pot bound. Moreover, the blade allows for maximum root growth space within each of the apertures and below the blade, therefore, significantly reducing root spiralling.

Beneficially, the inner volume allows the module to accommodate at least one blade.

Preferably, the module comprises a base wall, a lower wall, an upper wall and two side walls, which thus define an inner volume of the module. The exterior of the upper wall of the module may comprise a channel through which runs an irrigation system which may be linked to multiple plant holders. The channel may comprise a base having one or more apertures. In use, water from the irrigation system may enter the inner volume of the module via these apertures and flow under gravity through the inner volume, via the apertures located in the at least one blade. As such, the plants, located on the or each blade, receive water.

Preferably, a substantial number of the apertures are polygons, for example it is preferable that over 50% of the apertures are polygons. By this we mean that when a blade is viewed in plan view, each aperture is a shape with a straight line outline. Even more preferably, all of the apertures are polygons. Beneficially, polygon apertures allow for close packing of apertures on the blade, thus maximising the possible number of apertures on each blade.

Preferably, a substantial number of apertures are hexagonal, for example it is preferable that over 50% of the apertures are hexagonal, it is more preferable that over 60% of the apertures are hexagonal, it is more preferable that over 70% of the apertures are hexagonal, it is more preferable that over 80% of the apertures are hexagonal, it is even more preferable that over 90% of the apertures are hexagonal, and it is even more preferable that over 95% of the apertures are hexagonal. Most preferably, all of the apertures are hexagonal. Beneficially, hexagonal apertures provide a positive aesthetic appearance and allow for close packing of apertures on the blade. Moreover, hexagonal apertures provide a good balance between strength and rigidity of the blade, and the prevention of root spiralling, allowing the plants to take-up sufficient amounts of water and nutrients necessary for growth and development. Hexagonal apertures allow for directional growth of plant roots (i.e. a 'guiding' effect) which also prevents root spiralling.

The plurality of apertures may be circular.

The plurality of apertures may be elongated apertures, i.e. slots.

The plurality of apertures may be any shape which is closed around its edges.

The number of apertures, each aperture being closed around its edges, which the at least one blade comprises may be at least 10, at least 20, at least 40, at least 60, at least 80, at least 100, at least 150, at least 200, at least 250, at least 300, at least 350, at least 400, at least 450, at least 500, at least 550, at least 600, at least 650, at least 675, or at least 690. In addition to a plurality of apertures, each aperture being closed around its edges, the at least one blade may comprise at least one slit and/or at least one slot. Advantageously, where the module comprises a blade comprising a slit and/or a slot, the blade provides a greater area through which water can pass through and thus fall onto the plant(s) positioned below, while maintaining the structural integrity of the plant on the blade due to the plurality of apertures through which the plant roots can grow and entwine.

Preferably, the at least one blade comprises two side portions. Each side portion of the blade may abut an adjacent side wall of the module. It is preferable that in use the plants that are to be positioned on each blade are positioned on a portion of the blade which comprises a plurality of apertures, each aperture being closed around its edges.

Preferably, the plurality of apertures occupy an area equal to or greater than 10%, 20%, 30%, 40%, 50%, 60%, 70%, 80%, 90%, 95% or 98% of the surface area of the at least one blade.

The at least one blade may comprise a first portion, a second portion and a third portion. The first portion and the second portion may each comprise a plurality of apertures, each aperture being closed around its edges, and the second portion may not comprise any apertures. The first portion and the second portion may each comprise a plurality of apertures, each aperture being closed around its edges, and the second portion may not comprise any apertures of the form of apertures as comprised in the first portion and the third portion but may instead comprise at least one slit and/or at least one slot. Each portion comprising apertures may be equal to or greater than 5%, 10%, 15%, 20%, 25%, 30, 35%, 40%, 45% or 50% of the surface area of the blade. Each region comprising apertures, each aperture being closed around its edges, may comprise at least 10 apertures, at least 20 apertures, at least 40 apertures, at least 60 apertures, at least 80 apertures, at least 100 apertures, at least 150 apertures, at least 200 apertures, at least 250 apertures, at least 300 apertures, at least 350 apertures, at least 400 apertures, at least 450 apertures, at least 500 apertures, at least 550 apertures, at least 600 apertures, at least 650 apertures, at least 675 apertures, or at least 690 apertures. Beneficially, forming a blade comprising apertures only in distinct regions of the blade may decrease the speed of manufacturing the blade. Moreover, a blade comprising apertures only in distinct regions of the blade may beneficially provide a blade with greater inherent strength, such that, in use, plants are positioned only on the regions of the blade comprising apertures so that the beneficial effects of better flow of water through the module and greater opportunity for plant roots to grow and entwine are maintained, while increasing the inherent strength of the blade.

The plurality of apertures, each aperture being closed around its edges, may be positioned in a central region of the blade only, i.e. not positioned at either side portion of the blade or in relative close proximity to either side portion of the blade.

Preferably, the at least one blade is removable from the module. By this we mean that it is preferable that the at least one blade is not formed integrally with the module nor is it fixed to the module for example by a suitable adhesive or plastic welding. Beneficially, the removable blade allows the user to remove the blade if it becomes damaged and replace the damaged blade with a new blade. Advantageously, this means that the user does not have to replace the whole plant holder if he wishes to replace a blade, therefore providing a cost and time saving. A further advantage is that if the user wishes to accommodate a plant of a different type, size or growth rate in the plant holder, the user can easily remove one or more blades to create additional space for the new plants. Thus, advantageously, the plant holder is not manufactured as a one-off bespoke product and does not require a new plant holder to be manufactured if plants of a different type, size or growth rate are intended to be accommodated in the plant holder. Instead, the plant holder can be modified by the user (through the removal or addition of blades) to suit the needs of the user with regard to the plants they wish to use.

The plant holder may comprise at least one blade which is removable and at least one blade which is not removable, i.e. formed integral with the module or fixed to the module for example by a suitable adhesive or plastic welding.

Preferably, the module comprises at least one pair of ridges for supporting the at least one blade within the module. Beneficially, a pair of ridges facilitates insertion and removal of a blade from the module, and supports the blade within the module when in use. Preferably, the module comprises at least a pair of ridges on a first side wall and a second pair of ridges on a second side wall opposite to the first pair of ridges.

Preferably, the plant holder comprises a plurality of blades. The plant holder may comprise any number of blades, for example two, three, four, five, six, seven, eight, nine or ten blades. Most preferably, the plant holder comprises five blades.

The plant holder may comprise, in total, at least 300 apertures, at least 600 apertures, at least 900 apertures, at least 1200 apertures, at least 1500 apertures, at least 1800 apertures, at least 2100 apertures, at least 2400 apertures, at least 2700 apertures, at least 3000 apertures, at least 3100 apertures, at least 3200 apertures, at least 3300 apertures, at least 3400 apertures, or at least 3450 apertures, each aperture being closed around its edges.

When, as is most preferred, the plant holder comprises five blades, the plant holder preferably comprises, in total, at least 3400 apertures, most preferably at least 3450 apertures, each aperture being closed around its edges.

When, as is preferred, the plant holder comprises a plurality of blades, the number of apertures, each aperture being closed around its edges, on each blade may not be the same. In this regard, a blade positioned in greater proximity to a source of water from an irrigation system (when in use) may comprise a higher number of such apertures than a blade positioned further from the source of water from the irrigation system. It may be that the number of apertures, each aperture being closed around its edges, on each blade decreases with each blade through the module, i.e. the blade in greatest proximity to the source of water from the irrigation system comprising the highest number of apertures, and the blade positioned furthest from the source of water from the irrigation system having the fewest number of apertures. Beneficially, such an arrangement allows for water to easily pass through the blade closest to the irrigation system so as to prevent over saturation of the plants on this blade. Due to water uptake by the plants occurring on each blade, less water will reach the plants positioned on the blade furthest from the source of water from the irrigation system and thus the reduced number of apertures in these blades would retain more water on the blade and thus allow the plants positioned on blades furthest from the source of water to uptake water.

Preferably, the orientation of the at least one blade is such that, in use, the surface of the at least one blade upon which plants are positioned extends from the base wall forming an acute angle between the base wall and the surface of the at least one blade upon which plants are positioned. The acute angle may be an angle of between 10° and 90°, 15° and 85°, 20° and 80°, 25° and 75°, 30° and 70°, 35° and 65°, 40° and 60°, 42° and 55°, or 45° and 50°. Most preferably the acute angle is an angle of around 45°. Beneficially, the acute angle of the surface of the at least one blade relative to the base wall, when in use, allows the plants to be supported within the plant holder under gravity. The acute angle is such that, beneficially, the risk of the plants being dislodged and being displaced from the plant holder when in use (for example, due to strong winds) is significantly minimised, to the extent that it is extremely difficult to displace a plant from the plant holder without human intervention.

Preferably, the blades are spaced apart within the module at regular intervals. The blades may be spaced apart at irregular intervals.

Preferably, the module and the at least one blade is formed of recycled materials.

Preferably, each of the apertures are the same size or are substantially the same size. By this we mean that it is preferable that the area of each of the apertures is the same or is substantially the same. Each of the apertures may be a different size. A blade may comprise a plurality of apertures which are the same size or substantially the same size and a plurality of apertures which are a different size.

Preferably, the at least one blade comprises at least one foot. Advantageously, the at least one foot may protrude from a lower face, or edge, of the at least one blade. The lower face, or edge, of the blade being the face, or edge, of the blade which is adjacent to an interior face of the base wall of the module in use. The at least one foot may, therefore, abut the base wall of the module. Beneficially, this arrangement means that the blade is slightly raised above the base wall of the module (except for where the at least one foot of the blade abuts the base wall). This allows for additional through flow of water through the module when in use. More preferably the at least one blade comprises a pair of feet.

Preferably, an exterior face of the base wall comprises an attaching means. Beneficially, the attaching means attaches the module to the wall to which the Living Wall system is to be installed. The attaching means removes the need for the module to be affixed to a wall using separate fixing means, such as screws.

Beneficially, a Living Wall system comprising the plant holder of the present invention may be used to enable existing buildings to become carbon reducing, i.e. the Living Wall system may provide a carbon-offset benefit to the building on which it is installed.

Beneficially, the plant holder may be formed of materials which can be recycled and re-used.

Preferably, the module and the at least one blade are made of the same material. The plant holder may be made of any plastics material, metal, for example aluminium, or wood. Preferably, the plant holder is made of a plastics material. Preferably, the plant holder is made of polypropylene. Preferably, the plant holder is made of Enthoven Recycled Polypropylene Co-Polymer M Black 4250. The plant holder may be made of polyethylene, acrylonitrile butadiene styrene (ABS) or polycarbonate.

The plant holder, that is to say the module and/or the at least one blade, may be coated in a flame-retardant material or coating. The plant holder, that is to say the module and/or the at least one blade, may be coated in a water-proofing material or coating.

Optionally, the plant holder of the first aspect of the invention may include any of the below-mentioned optional features of the second aspect of the invention.

According to a second aspect of the present invention, there is provided a blade for a plant holder, the blade comprising a plurality of apertures, each aperture being closed around its edges.

Preferably, the blade is rectangular in shape, although any shape of blade would suffice so long as it provides a platform upon which one or more plants can be positioned on and supported.

Preferably, the blade comprises at least two apertures, more preferably the blade comprises at least 10 apertures, more preferably the blade comprises at least 20 apertures, more preferably the blade comprises at least 40 apertures, more preferably the blade comprises at least 60 apertures, more preferably the blade comprises at least 80 apertures, more preferably the blade comprises at least 100 apertures, more preferably the blade comprises at least 150 apertures, more preferably the blade comprises at least 200 apertures, more preferably the blade comprises at least 250 apertures, more preferably the blade comprises at least 300 apertures, more preferably the blade comprises at least 350 apertures, more preferably the blade comprises at least 400 apertures, more preferably the blade comprises at least 450 apertures, more preferably the blade comprises at least 500 apertures, more preferably the blade comprises at least 550 apertures, more preferably the blade comprises at least 600 apertures, even more preferably the blade comprises at least 650 apertures, even more preferably the blade comprises at least 680 apertures, and most preferably the blade comprises 690 apertures.

The blade may comprise at least one slit and/or at least one slot. The at least one slit and/or at least one slot may preferably have a length of between 20% and 80% of the height of a blade, more preferably between 35% and 65% of the height of a blade, and most preferably 50% of the height of a blade. Be 'height' of the blade, we mean the distance from a position on the blade most proximal to the base wall to a position on the blade most distal to the base wall when in use.

Optionally, the blade of the second aspect of the invention may include thereof any of the above-mentioned optional features of the first aspect of the invention.

According to a third aspect of the present invention, there is provided a use of a plant holder according to the first aspect of the invention in the manufacture, or installation, of a Living Wall system. Optionally, the third aspect of the invention may include thereof any of the above-mentioned optional features of the first or second aspects of the invention.

According to a fourth aspect of the present invention, there is provided a Living Wall system comprising the plant holder according to the first aspect of the invention. Optionally, the Living Wall system of the fourth aspect of the invention may include thereof any of the above-mentioned optional features of the first or second aspects of the invention.

According to a fifth aspect of the present invention, a kit of parts for a plant holder is provided, comprising a module and at least one blade, the at least one blade comprising a plurality of apertures, each aperture being closed around its edges.

Optionally, the kit of parts for the plant holder may include therein a module and at least one blade having any of the above-mentioned optional features of the first and second aspects of the invention.

### Detailed Description of the Invention

In order that the invention may be more clearly understood an embodiment thereof will now be described, by way of example only, with reference to the accompanying drawings, of which:

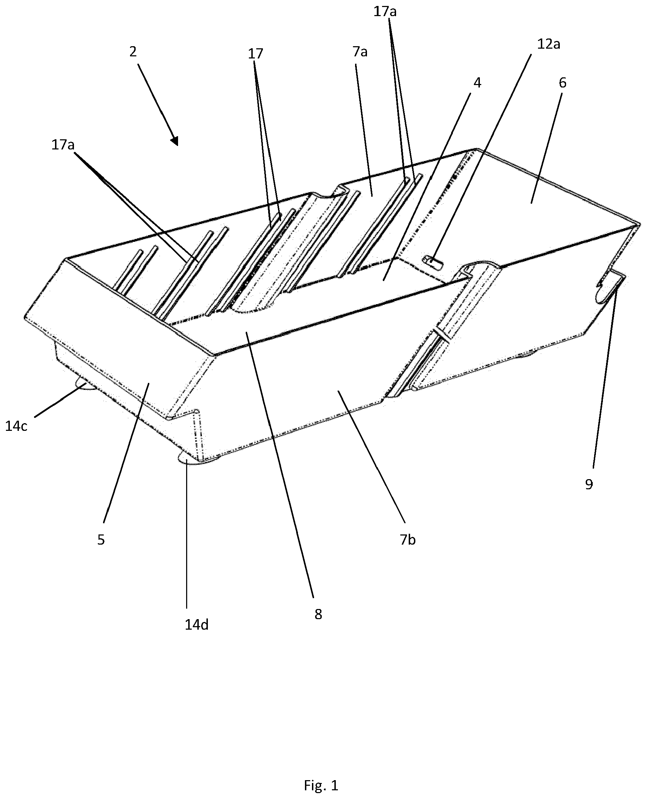

- Figure 1: is a perspective view of a module;

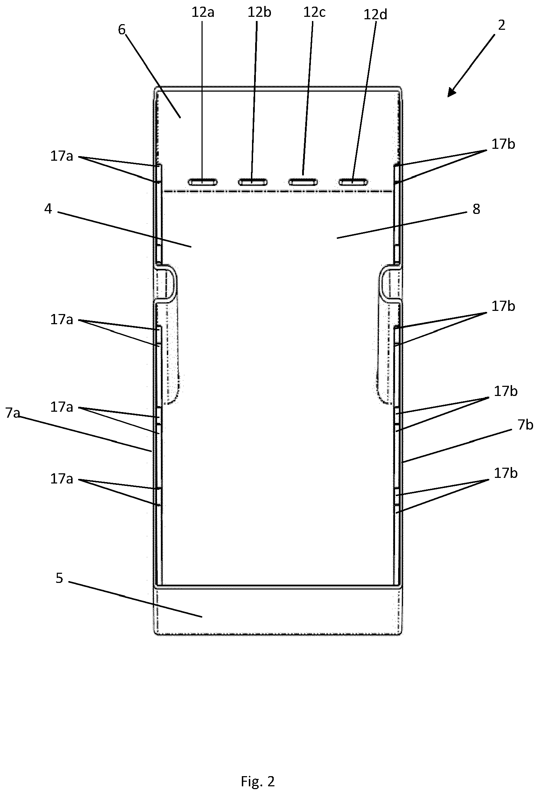

- Figure 2: is a plan view of the module as shown in Figure 1;

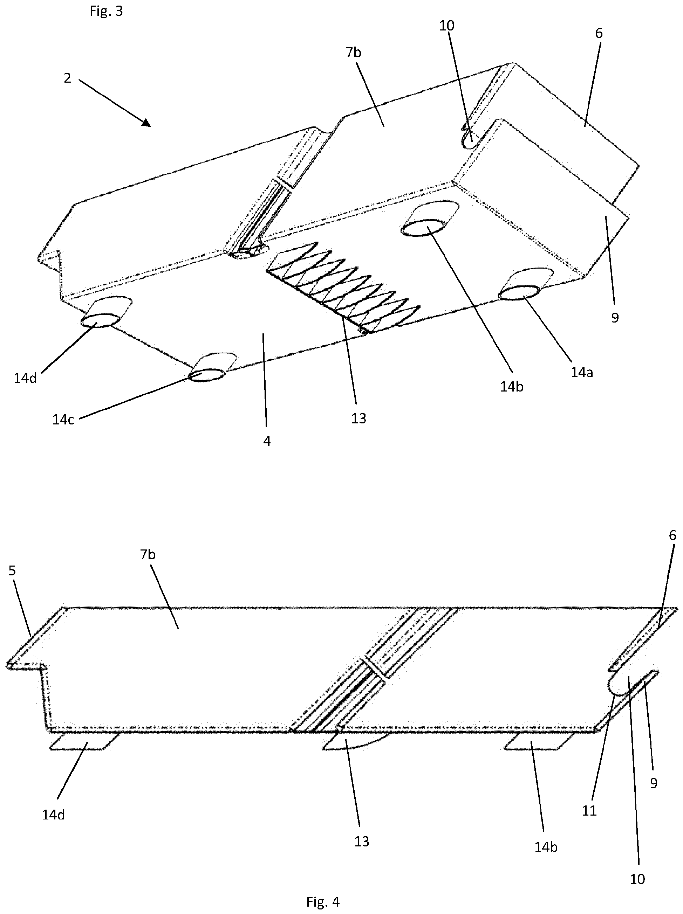

- Figure 3: is a bottom perspective view of the module as shown in Figures 1 and 2;
- Figure 4: is a side view of the module as shown in Figures 1-3;
- Figure 5: is a perspective view of a blade;
- Figure 6: is a plan view of the blade as shown in Figure 5;
- Figure 7: is a rear view of the blade as shown in Figures 5 and 6;
- Figure 8: is a side view of the blade as shown in Figures 5-7;
- Figure 9: is a side view of the blade as shown in Figures 5-8, viewed from the opposite side of the blade to that shown in Figure 8;
- Figure 10: is a bottom view of the blade as shown in Figures 5-9;
- Figure 11: is a perspective view of a plant holder comprising a module and a plurality of blades; and
- Figure 12: is a plan view of the plant holder as shown in Figure 11 in the vertical orientation, i.e. as in use.

With reference to the figures, there is shown a module 2 for a plant holder 1, the plant holder 1 being for use in a Living Wall system. The module 2 comprises a base wall 4, a lower wall 5, an upper wall 6 and two side walls 7a, 7b. In use, that is to say when the plant holder 1 is affixed to a wall as part of a Living Wall system, the orientation of the plant holder 1 is such that the base wall 4 is positioned against the wall to which the Living Wall system is to be installed. The base wall 4, lower wall 5, upper wall 6 and side walls 7a, 7b define an inner volume 8 of the module 2. Each of the base wall 4, lower wall 5, upper wall 6 and side walls 7a, 7b comprise an exterior face and an inner face. The exterior face facing outwardly from the module 2, and the inner face facing inwardly toward the inner volume 8. In use, the exterior face of the lower wall 5 faces the ground.

The inner surface of side wall 7a comprises a pair of ridges 17a which are positioned opposite, and similarly orientated to, a pair of ridges 17b located on the inner surface of side wall 7b.

The base wall 4 comprises four supports 14a, 14b, 14c, 14d. In use, the supports 14a, 14b, 14c, 14d abut the wall to which the Living Wall system is to be installed.

Upper wall 6 comprises a protruding lip portion 9. The lip portion 9 defines a channel 10 between the upper wall 6 and the protruding lip portion 9. The channel 10 comprises a base 11 which includes four apertures 12a, 12b, 12c, 12d, each in the form of a slot. In use, the channel 10 accommodates a pipe (not shown) or similar which is part of an irrigation system to be used to provide water to plants located within the plant holder. The pipe, or similar, being configured to provide water, and other plant foodstuffs as necessary, to the channel 10. In use, the water and any other plant foodstuffs from the hose or similar, or rainwater, may enter the module via apertures 12a, 12b, 12c, 12d.

An attaching means 13 is provided on the exterior face of the base wall 4. The attaching means 13 is in the form of an elongated projection which spans the majority of the width of the exterior face of the base wall 4. In use, the attaching means 13 can be hooked upon a corresponding attaching means fixed to the wall (not shown) to which the Living Wall system is to be installed.

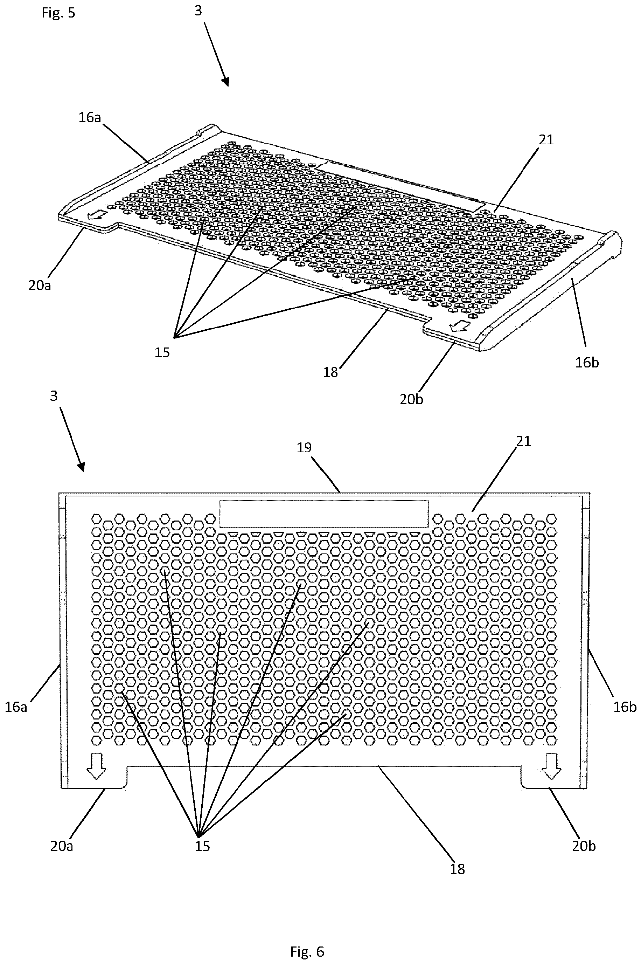

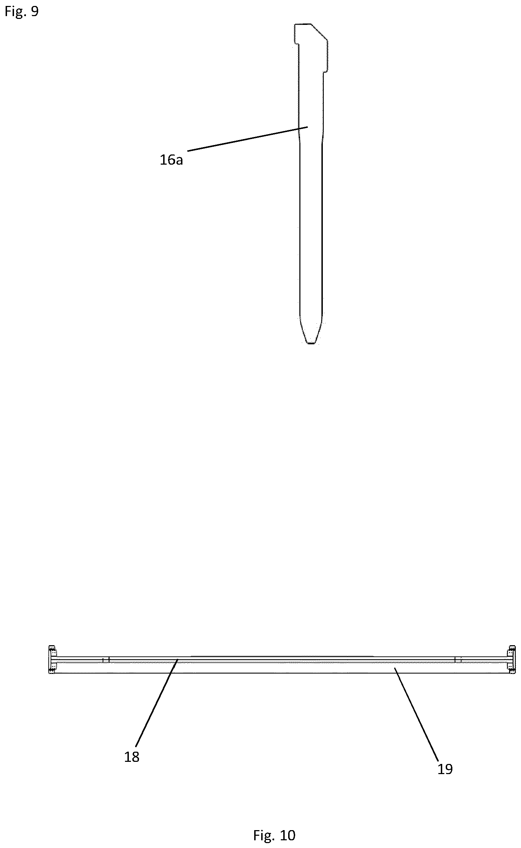

With reference to figures 5 to 10, there is shown a blade 3 for a plant holder 1. The blade 3 is substantially rectangular. The blade 3 comprises a lower face 21, an upper face 22, two side portions 16a, 16b, a lower edge 18 and an upper edge 19. In use, that is to say when a blade 3 is inserted between opposite pairs of ridges 17a and 17b, the lower face 21 of the blade 3 substantially faces, at an angle, the interior face of lower wall 5, and the upper face 22 of the blade 3 substantially faces, at an angle, the interior face of upper wall 6. As can be seen in figure 5, side portions 16a and 16b are slightly elevated above the lower face 21 and upper face 22 of the blade 3.

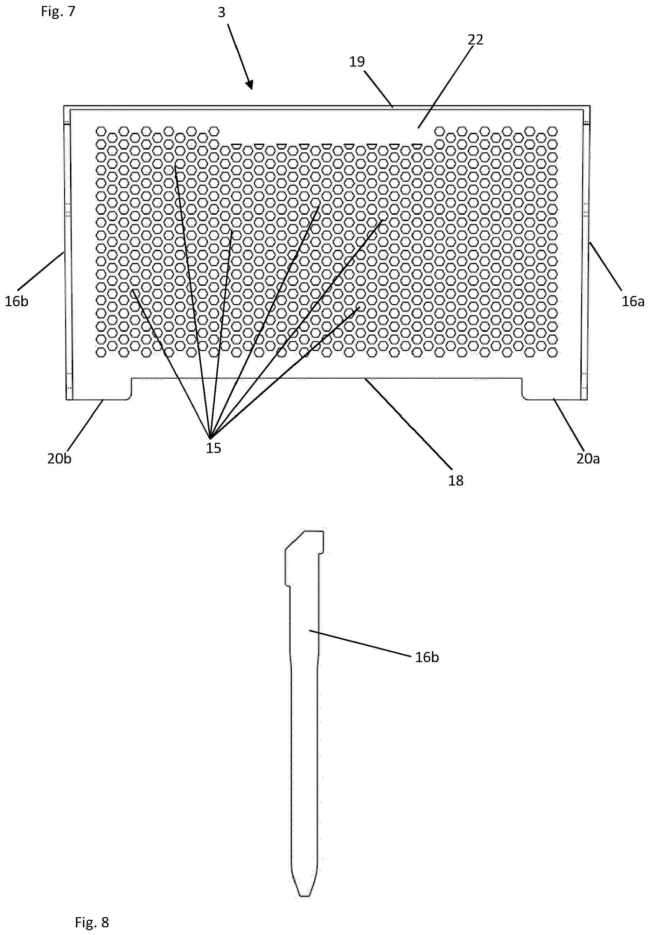

A plurality of apertures 15, each aperture 15 being closed around its edges, are spread across the length and width of a significant portion of the blade 3. In this embodiment, the blade 3 only comprises apertures which are closed around their edges. By this we mean that each aperture is surrounded by a portion of the blade 3. Moreover, in this embodiment, the blade 3 does not comprise any apertures which are open at at least one end. For instance, the blade 3 does not comprise any slits, i.e. an elongated cut-through in the blade, the cut-through being open at one end and closed at its opposite end. In use, a plant is positioned on the upper face 22 of the blade 3. The spacing of the apertures 15 is such that, in use, when a plant is positioned on the upper face 22 of the blade 3, multiple apertures 15 will be located below the plant. Each aperture 15 is hexagonal or, in some instances, partially hexagonal where a full hexagonal aperture is not able to be formed due to, for example, the blade 3 comprising spacing for a logo, as can be seen by a number of the central, uppermost apertures 15 in figures 6 and 7.

In this embodiment, each blade 3 comprises 690 apertures 15. Thus, in total the plant holder 1 of this embodiment comprises 3450 apertures 15.

A pair of feet 20a, 20b project from the lower edge 18 of the blade 3.

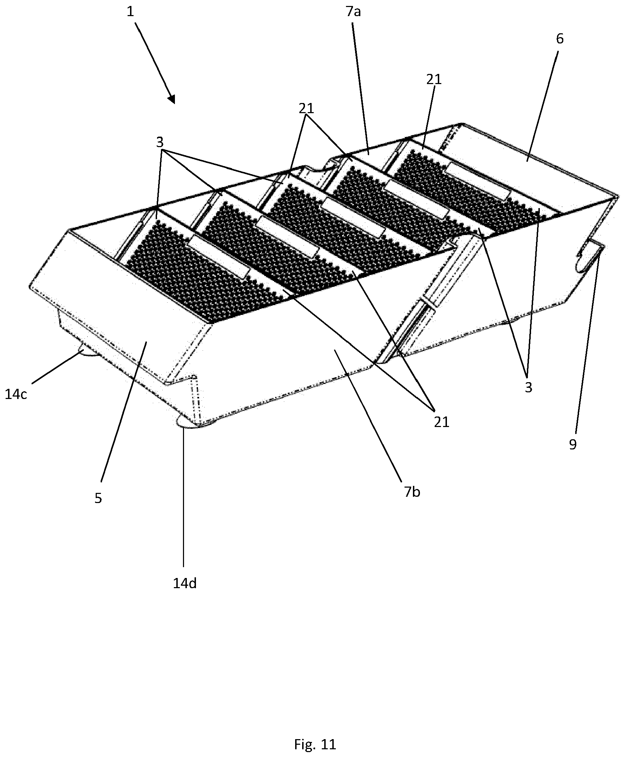

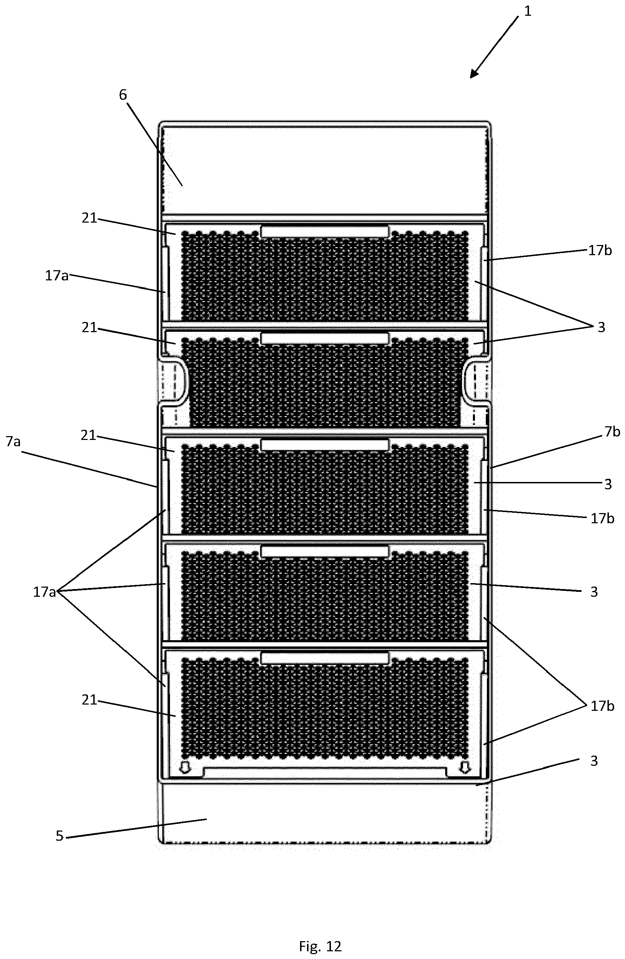

With reference to figures 11 and 12, each blade 3 is inserted into the module 2 between each pair of corresponding ridges 17a, 17b. A module 2 can accommodate a number of blades 3 equal to or less than the number of pairs of ridges 17a or 17b. As shown in the embodiment illustrated by figures 11 and 12, the module 2 is capable of accommodating five selectively removable blades 3. Depending on the type and, therefore, size, of the plants to be held in the plant holder 1, one or more blades 3 may be removed from the module 2 to provide more available space between the remaining blades 3. Thus, the module 2 can be adapted to accommodate different types of plants.

The angled orientation of the ridges 17a, 17b, and thus each blade 3 when inserted between each pair of corresponding ridges 17a, 17b, means that each plant positioned on the upper face 22 of each respective blade 3 is supported between the blade 3, base wall 4 and side walls 7a, 7b. The orientation of each blade 3 is such that, in use, the surface of each blade 3 upon which plants are positioned (upper face 22 of each blade 3) extends from the base wall 4 forming an angle of 45° between the base wall 4 and the upper face 22 of each blade 3 upon which plants are positioned.

As illustrated in this embodiment, due to the spread of apertures 15 across a significant portion of each blade 3, in use a plant (not shown), or multiple plants, may be positioned on each blade 3 on top of a significant number of apertures 15.

In this embodiment, the module 2 and each blade 3 are made of the same material, this material being Enthoven Recycled Polypropylene Co-Polymer M Black 4250.

The one or more embodiments are described above by way of example only. Many variations are possible without departing from the scope of protection afforded by the appended claims.

## Claims

1. A plant holder comprising a module and at least one blade, the at least one blade comprising a plurality of apertures, each aperture being closed arounds its edges, wherein a substantial number of apertures are hexagonal.

2. A plant holder according to any preceding claim, wherein the apertures occupy an area equal to or greater than 10% of the surface area of the at least one blade.

3. A plant holder according to claim 2, wherein the apertures occupy an area separated into two or more distinct regions of the at least one blade.

4. A plant holder according to any preceding claim, wherein the at least one blade comprises at least 60 apertures, each of the at least 60 apertures being closed around its edges.

5. A plant holder according to claim 4, wherein the at least one blade comprises at least 300 apertures, each of the at least 300 apertures being closed around its edges.

6. A plant holder according to any preceding claim, wherein the at least one blade is removable from the module.

7. A plant holder according to any preceding claim, wherein the plant holder comprises a plurality of blades.

8. A plant holder according to claim 7, wherein the plant holder comprises five blades.

9. A plant holder according to any preceding claim, wherein the module and the at least one blade is formed of recycled materials.

10. A plant holder according to any preceding claim, wherein the module comprises at least one blade comprising a slit and/or a slot.

11. A plant holder according to any preceding claim, wherein the module and the at least one blade are made of polypropylene.

12. Use of a plant holder according to any of claims 1 to 11 in the manufacture of a Living Wall system.

13. A blade for a plant holder, the blade comprising a plurality of apertures, each aperture being closed arounds its edges, wherein a substantial number of apertures are hexagonal.

14. A Living Wall system comprising the plant holder according to any of claims 1 to 11.

15. A kit of parts for forming a plant holder, comprising:
- a module; and
- at least one blade comprising a plurality of apertures, each aperture being closed around its edges, wherein a substantial number of apertures are hexagonal.
